# EUROPÄISCHE PATENTSCHRIFT

(11) **EP 3 114 348 B1**
(45) Veröffentlichungstag und Bekanntmachung des Hinweises auf die Patenterteilung: **07.10.2020**
(21) Anmeldenummer: 15706479.1
(22) Anmeldetag: 26.02.2015
(51) Int. Cl.: F03D 1/06, B29C 65/48, B29C 65/54, B29L 31/08, B29K 105/20

(54) **VERFAHREN ZUM HERSTELLEN EINES ROTORBLATTS EINER WINDENERGIEANLAGE, ROTORBLATT UND WINDENERGIEANLAGE**
METHOD FOR PRODUCING A ROTOR BLADE OF A WIND TURBINE, A ROTOR BLADE AND A WIND TURBINE
PROCÉDÉ SERVANT À FABRIQUER UNE PALE DE ROTOR D'UNE ÉOLIENNE, PALE DE ROTOR ET ÉOLIENNE

(30) Priorität: 04.03.2014 DE 102014203936
(43) Veröffentlichungstag der Anmeldung: 11.01.2017
(73) Patentinhaber: Senvion GmbH, 22297 Hamburg (DE)
(72) Erfinder: BENDEL, Urs, 24787 Fockbek (DE); EYB, Enno, 24116 Kiel (DE); RICHERS, Tilman, 60314 Frankfurt am Main (DE); FLACH, Christian, 24783 Osterrönfeld (DE); MESTER, Hendrik, 24118 Kiel (DE)
(74) Vertreter: Wallinger Ricker Schlotter Tostmann
(86) Internationale Anmeldenummer: PCT/EP2015/053976
(87) Internationale Veröffentlichungsnummer: WO 2015/132115

(56) Entgegenhaltungen:
- EP-A2- 0 037 987
- DE-A1-102012 012 298

## Beschreibung

Die Erfindung betrifft ein Verfahren zum Herstellen eines Rotorblatts einer Windenergieanlage, das einen blattwurzelnahen Bereich aufweist, in dem das Rotorblatt eine stumpfe Hinterkante aufweist, sowie ein entsprechendes Rotorblatt und eine Windenergieanlage.

Rotorblätter moderner Windenergieanlagen weisen Längen von mehr als 50 m auf. Zu ihrer Herstellung werden in vielen Fällen zunächst zwei Halbschalen aus jeweils einer Vielzahl von Lagen eines Faserverbundwerkstoffs hergestellt, in die Stützstrukturen wie Holmkästen, Rotorblattgurte, Stege o.ä. eingebracht werden. Anschließend werden die Halbschalen zusammengesetzt und entlang ihrer Stoßkante miteinander verklebt.

Viele Rotorblätter weisen in einem blattwurzelnahen Bereich ein so genanntes abgeschnittenes Rotorblattprofil mit einer stumpfen Profilhinterkante auf. Diese Hinterkante wird auch als Abschlusssteg bezeichnet. In einigen Fällen wird der Abschlusssteg als Prefab hergestellt und in einem separaten Verfahrensschritt in die Lücke zwischen der oberen und der unteren Halbschale eingebracht und verklebt.

Alternativ kann der Abschlusssteg auch zusammen mit der jeweiligen Halbschale geformt und hergestellt werden. In diesem Fall ergibt sich im Abschlusssteg im Übergangsbereich zum Vollprofil mit spitzer Profilhinterkante ein Klebespalt, dessen Spaltmaß nur schwer zu kontrollieren ist. Es ergeben sich sehr dicke Klebespalte im hochbelasteten wurzelnahen Bereich, die im Betrieb zur Rissbildung neigen. Um dies zu verhindern, wird im Übergangsbereich arbeitsaufwendig auflaminiert, um die Vorgaben hinsichtlich Klebespalt von nicht mehr als 10 bis 30 mm zu erfüllen.

EP 0 037 987 A2 betrifft ein Verfahren zur Herstellung von schaumkerngestützten Formkörpern wie unter anderem Rotorblättern in nicht schließbaren Formen, wobei die Schale des Formkörpers in zwei getrennten Formkörperhälften aus Faserverbundwerkstoff laminiert und ausgehärtet wird, der Schaumkern in jeder Schale des Formkörpers direkt hergestellt und bearbeitet wird und nach Bearbeitung der Trennebenen der Formkörperhälften diese miteinander verklebt werden.

DE 10 2012 012 298 A1 betrifft ein Klebeverfahren und eine entsprechende Klebevorrichtung zum Zusammenkleben von Fügeteilen, die an ihren zusammenzufügenden Stirnflächen Klebeflächen aufweisen, insbesondere zum Zusammenkleben von Rotorblatthalbschalen. Die Fügeteile werden durch Injektionskleben miteinander verklebt, wobei ein Klebstoff in eine Klebefuge zwischen den Klebeflächen der Fügeteile injiziert wird.

Hiervon ausgehend liegt der vorliegenden Erfindung die Aufgabe zugrunde, die Stabilität von Rotorblättern im Bereich der stumpfen Hinterkante und des Übergangs zum Vollprofil zu verbessern.

Diese Aufgabe wird durch ein Verfahren zum Herstellen eines Rotorblatts einer Windenergieanlage, das einen blattwurzelnahen Bereich aufweist, in dem das Rotorblatt eine stumpfe Hinterkante aufweist, mit den folgenden Verfahrensschritten gelöst:
- Herstellen einer druckseitigen Halbschale und einer saugseitigen Halbschale, die in dem blattwurzelnahen Bereich, in dem das Rotorblatt die stumpfe Hinterkante aufweist, jeweils einen Teil der stumpfen Hinterkante ausbilden,
- Einbringen und Verkleben von Füllkörpern in jeweils wenigstens einen Abschnitt des Bereichs der stumpfen Hinterkante der druckseitigen Halbschale und der saugseitigen Halbschale, wobei die Füllkörper an der jeweiligen stumpfen Hinterkante der druckseitigen Halbschale und der saugseitigen Halbschale anliegen, wobei die Abschnitte mit den Füllkörpern einander im zusammengesetzten Rotorblatt gegenüberliegen,
- Zusammensetzen und Positionieren der Halbschalen zueinander, wobei zwischen den Füllkörpern ein Klebespalt verbleibt, der von ersten Klebeflächen der Füllkörper begrenzt wird,
- Einbringen eines Klebemittels in den Klebespalt.

Andere übliche Verfahrensschritte wie Herstellen und Einbringen eines Holmkastens, von Rotorblattgurten und -stegen oder anderen Stütz- oder Haltestrukturen, Lösen aus den Schalenformen usw. bleiben hiervon unberührt.

Die Erfindung beruht auf dem Grundgedanken, die Verklebung im Übergangsbereich des Blattes vom Bereich mit abgeschnittenen Profilen in dem Bereich mit normalen Profilen so zu realisieren, dass sich überall ein definierter Klebespalt ergibt. Hierfür wird mittels der Füllkörper ein definierter und gut kontrollierbarer Klebespalt erzeugt, der außerdem eine größere Klebeoberfläche und somit eine bessere Verklebung der Halbschalen in diesem Bereich bietet. Die auch "Schwerter" genannten Füllkörper bilden einen Übergang vom Abschlusssteg in die normale Schalenverklebung.

In einer vorteilhaften Weiterbildung wird vor dem Einbringen eines Klebemittels in den Klebespalt ein ein- oder mehrteiliger flächiger Verschlusskörper an in Bezug auf das Rotorblatt innenliegenden zweiten Klebeflächen beider Füllkörper zum Verschließen des Klebespalts eingebracht. Die flächige Verklebung des Verschlusskörpers mit den Füllkörpern sorgt dafür, dass der Klebespalt abgedichtet wird und somit kein Überschuss an Klebemittel in den Klebespalt abgegeben werden kann, der ins Innere des Rotorblatts laufen würde. Außerdem verstärkt der flächig verklebte Verschlusskörper die Verklebung der Füllkörper und somit der Halbschalen miteinander. Vorteilhafterweise wird der Verschlusskörper vor dem Zusammensetzen der Halbschalen an einem Füllkörper befestigt, insbesondere an dem Füllkörper in der beim Zusammensetzen unteren Halbschale. Nach dem Zusammensetzen muss dann nur noch die Verklebung des Verschlusskörpers mit der anderen, insbesondere oben liegenden, Halbschale erfolgen. Hierzu wird vorteilhafterweise der Verschlusskörper beim Verkleben mit Seilen und/oder Schnüren an den oder die Füllkörper angelegt und/oder angepresst, wobei die Seile und/oder Schnüre insbesondere nach dem Ankleben abgeschnitten oder entfernt werden.

In Anpassung an den Verlauf des Rotorblattprofils weist vorteilhafterweise wenigstens ein Füllkörper mehrere Abschnitte mit unterschiedlichen Querschnitten und/oder Querschnittsverläufen auf. Diese Querschnitte sind quer zur Längserstreckung des Rotorblatts definiert. Ein Querschnittsverlauf bezeichnet den Verlauf des Querschnitts in Richtung der Längserstreckung des Rotorblatts. Die Querschnitte bzw. Querschnittsverläufe sind an die Rotorblattkontur angepasst und weisen wenigstens einen an den Abschlusssteg angrenzenden Teil auf, der eine vorzugsweise ebene erste Klebefläche für den Klebespalt aufweist.

Ebenfalls vorteilhafterweise ist oder wird wenigstens ein Füllkörper aus mehreren Teilkörpern zusammengesetzt. Dies erleichtert die Handhabung des Füllkörpers und dessen Einbringung in die entsprechende Halbschale.

Vorzugsweise verlaufen die zweiten Klebeflächen wenigstens abschnittsweise schräg zu den ersten Klebeflächen. Hierzu ist vorzugsweise ein weiterer Querschnittsteil vorgesehen, der die schräge zweite Klebefläche aufweist, die bis zur Innenseite der Schale reicht. Die schräge zweite Klebefläche kann an die erste Klebefläche angrenzen, sie kann aber auch abschnittsweise bereits unterhalb der ersten Klebefläche enden, so dass die zweite Klebefläche zweigeteilt ist.

In einer vorteilhaften Ausführung der Erfindung sind die Füllkörper elastisch und massiv ausgebildet, insbesondere Balsaholz, einen Schaumstoff oder einen faserverstärkten Verbundwerkstoff umfassen. Diese Bauweise erlaubt eine leichtgewichtige aber stabile Klebeverbindung der Halbschalen im Übergangsbereich von der stumpfen Hinterkante zum Vollprofil.

Vorzugsweise umfasst der Verschlusskörper einen faserverstärkten Kunststoff. Die Fasern sind vorzugsweise quer zur Längserstreckung des Rotorblatts ausgerichtet. Diese Ausführung erlaubt eine besonders stabile und mechanisch widerstandsfähige Verbindung der Füllkörper miteinander. Der Verschlusskörper kann auch über die zweiten Klebeflächen hinausreichen und mit einer Innenseite der Blattschale verklebt werden, wodurch die Verbindung von Füllkörper mit der Blattschale vorteilhaft weiter gefestigt wird.

Eine besonders stabile Verklebung ergibt sich vorzugsweise, wenn der Verschlusskörper wenigstens abschnittsweise einen "V"-förmigen Querschnitt und/oder wenigstens abschnittsweise einen stumpfen "V"-förmigen Querschnitt aufweist, insbesondere angepasst an die zweiten Klebeflächen der Füllkörper.

Die der Erfindung zugrunde liegende Aufgabe wird auch durch ein Rotorblatt einer Windenergieanlage mit einer stumpfen Profilhinterkante in einem blattwurzelnahen Bereich gelöst, das in einem erfindungsgemäßen, zuvor beschriebenen Verfahren hergestellt ist, wobei die stumpfe Hinterkante durch eine druckseitige Halbschale und eine saugseitige Halbschale ausgebildet ist, mit Füllkörpern in wenigstens einem Abschnitt der stumpfen Hinterkante, die an der stumpfen Hinterkante der saugseitigen Halbschale und der stumpfen Hinterkante der druckseitigen Blattschale anliegen. Vorzugsweise ist ein Abschlusskörper umfasst, mittels dessen ein Klebespalt zwischen den Füllkörpern abgedichtet ist.

Die der Erfindung zugrunde liegende Aufgabe wird außerdem durch eine Windenergieanlage mit wenigstens einem entsprechenden erfindungsgemäßen Rotorblatt gelöst.

Die zu dem erfindungsgemäßen Verfahren genannten Merkmale, Eigenschaften und Vorteile gelten entsprechend für das erfindungsgemäße Rotorblatt und die Windenergieanlage.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Perspektivdarstellung eines Rotorblatts,
- Fig. 2: eine Perspektivdarstellung einer Rotorblatthalbschale mit einem erfindungsgemäßen Füllkörper,
- Fig. 3a) - c): Darstellungen eines erfindungsgemäßen Füllkörpers und seiner Einbringung in ein Rotorblatt.

In den Zeichnungen sind jeweils gleiche oder gleichartige Elemente und/oder Teile mit denselben Bezugsziffern versehen, so dass von einer erneuten Vorstellung jeweils abgesehen wird.

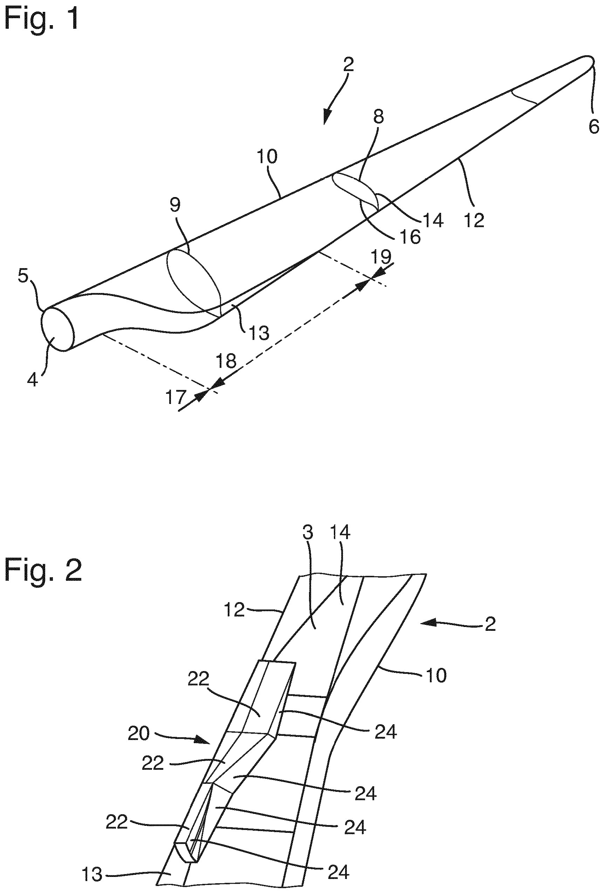

In Fig. 1 ist ein Rotorblatt 2 einer Windenergieanlage in einer perspektivischen Ansicht schematisch dargestellt. Das Rotorblatt 2 weist eine Längserstreckung von einer Rotorblattwurzel 4 mit rundem Querschnitt zu einer Rotorblattspitze 6 auf. Sein Profil weist in seiner Längserstreckung eine Vielzahl von aerodynamischen Querschnittsprofilen 8, 9 auf, von denen einige als Querschnittsformen dargestellt sind. So ist im mittleren Bereich, dem in diesem Zusammenhang so genannten Vollprofilbereich 19, ein aerodynamisches Querschnittsprofil 8 in Form eines Vollprofils gezeichnet, das sich von einer Profilvorderkante 10 zu einer Profilhinterkante 12 erstreckt und eine Saugseite 14 und eine Druckseite 16 aufweist.

In einem wurzelnäheren Übergangsbereich 18 ist die Profilhinterkante 12 abgeschnitten und geht in eine stumpfe Hinterkante 13 mit einem Abschlusssteg über, die sich zur Blattwurzel 4 hin weiter verbreitert und schließlich im zylindrischen Bereich 17 in den runden Querschnitt 5 der Rotorblattwurzel 4 übergeht. In dem Übergangsbereich 18 mit der stumpfen Hinterkante ist ein stumpfes aerodynamisches Querschnittsprofil 9 gezeigt, dass eine größere relative Dicke als das aerodynamische Querschnittsprofil 8 im mittleren Bereich des Rotorblatts aufweist, wobei die relative Dicke als Verhältnis von Dicke zu Sehnenlänge von Profilvorderkante 10 zu Profilhinterkante 12 definiert ist.

Fig. 2 zeigt einen Ausschnitt bzw. Abschnitt einer Innenseite einer Rotorblatthalbschale 3 in einer schematischen Perspektivdarstellung. Nach unten geht es zur Rotorblattwurzel, nach oben zur Rotorblattspitze. Es ist der Übergangsbereich von einem abgeschnittenen Profil zum Vollprofil dargestellt. Auf der linken unteren Seite ist die stumpfe Hinterkante 13 erkennbar. Die stumpfe Hinterkante 13 wird zur Spitze, also in der Darstellung nach oben hin, schmaler. In diesem Bereich ist ein Füllkörper 20 eingebracht, der an der stumpfen Hinterkante 13 anliegt. Der Füllkörper 20 weist mehrere Abschnitte in Längsrichtung des Rotorblatts auf, wobei wurzelnah zunächst ein schmaler Abschnitt mit einem im Wesentlichen rechteckigen Profil angeordnet ist, der an seiner Oberseite eine erste Klebefläche 22 aufweist. Diese erste Klebefläche 22 dient der Verklebung mit der anderen Halbschale am Klebespalt. Seine innenliegende Seitenfläche bildet zusammen mit einem dreieckigen ansteigenden Schrägprofil eine zweite Klebefläche 24 für einen in Fig. 2 nicht dargestellten Abschlusskörper.

Im weiteren Verlauf in Richtung auf die Rotorblattspitze zu verbreitert sich die erste Klebefläche 22, die Profilhöhe nimmt jedoch ab, entsprechend der abnehmenden Höhe der stumpfen Hinterkante 13 bzw. des Abschlussstegs. Dies setzt sich in einem dritten Abschnitt fort, in dem die Höhe des Füllkörpers 20 bis zu seinem Ende hin weiter abnimmt.

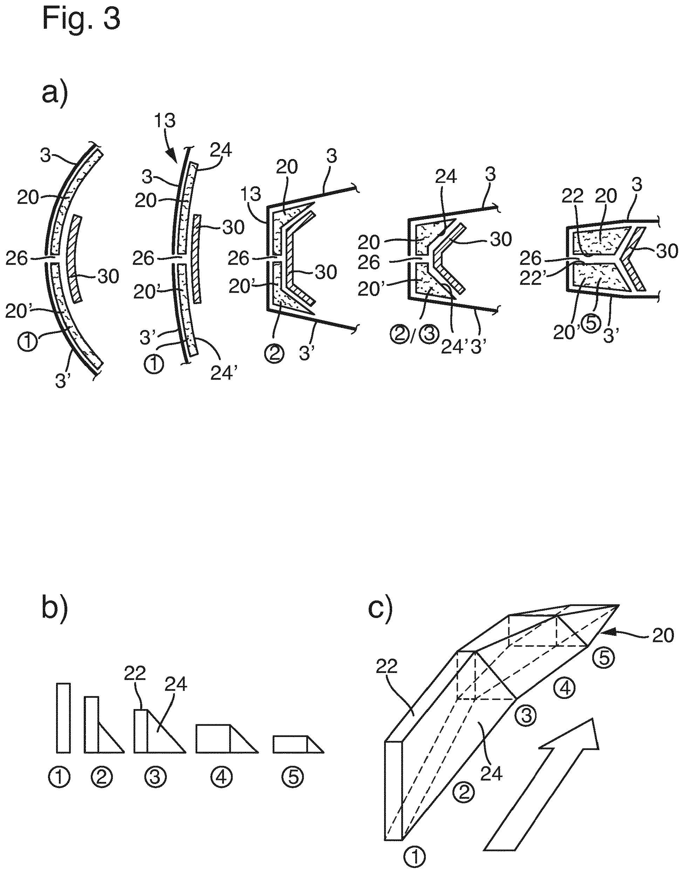

Fig. 3 zeigt in den Teilfiguren a), b) und c) verschiedene Ansichten der erfindungsgemäßen Strukturen (schematische Darstellung). So ist in Fig. 3c) eine perspektivische Darstellung des Füllkörpers 20, im Wesentlichen entsprechend der Ausführungsform gemäß Fig. 2, gezeigt. Dieser Füllkörper 20 ist aus mehreren Teilkörpern zusammengesetzt, die regelmäßige geometrische Strukturen aufweisen und an die Innenkontur und Auslegung des entsprechenden Rotorblatts angepasst sind. So ist blattwurzelnah im Bereich der Position, die mit einer eingekreisten 1 verzeichnet ist, ein im Wesentlichen rechteckiges Profil vorhanden. Ein dreieckiges Profil startet im Längsverlauf kurze Zeit später und wächst bis zu einer Position 3 bis zur vollen Höhe des im Wesentlichen rechteckigen Körpers. Die erste Klebefläche 22 verläuft somit im Wesentlichen eben, während die zweite Klebefläche 24 in diesem Abschnitt zwischen der Position 1 und der Position 3 zwei Teilflächen aufweist. Im Abschnitt zwischen der Position 3 und der Position 5 verändert sich in Längsrichtung des Füllkörpers 20 die Querschnittskontur des im Wesentlichen rechteckigen Körpers sowie des im Wesentlichen dreieckigen Körpers, die jeweils die erste Klebefläche 22 und die zweite Klebefläche 24 definieren. Dabei nimmt im Längsverlauf die Höhe des Füllkörpers 20 ab, jedoch verbreitert sich der rechteckige Querschnitt. Im Bereich jenseits der Position 5 nimmt die Höhe beider Teilkörper weiter ab, bis zur Höhe Null an ihrem Ende. Es bildet sich somit eine rechteckige und eine im Querschnitt dreieckige Rampe.

In Fig. 3b) sind für die genannten Punkte entlang des Längsverlaufs von der Position1 bis zur Position 5 die jeweiligen Querschnitte gezeigt.

In Fig. 3a) sind für die gleichen Querschnittspunkte in den Kreisen die Anordnung im zusammengesetzten Rotorblatt gezeigt, bei denen die Halbschalen 3 und 3' zum Rotorblatt zusammengesetzt worden sind. Es handelt es sich jeweils um die Hinterkante. Ganz links ist der kreisrunde Blattwurzelbereich ausschnittsweise gezeigt, in dem sowohl die Füllkörper 20, 20' der kreisförmigen Krümmung folgen, als auch der Abschlusskörper 30. Es bildet sich zwischen den Füllkörpern 20, 20' und dem Abschlusskörper 30 ein Klebespalt 26.

In der zweiten Darstellung von links, die ebenfalls mit einer eingekreisten 1 als Positionsmarkierung gekennzeichnet ist, geht das runde Rotorblattprofil allmählich in die stumpfe Hinterkante über. Die strukturellen Bestandteile und Bezugszeichen sind die gleichen wie in der linken Darstellung. Dies setzt sich in den weiteren Darstellungen fort.

In der nächsten Darstellung, der mittleren von Fig. 3a), hat sich nun das stumpfe Hinterkantenprofil voll ausgebildet. Die Füllkörper 20, 20' haben nun ein "L"-förmiges Querschnittsprofil. Der Abschlusskörper 30 ist hieran angepasst und hat eine Wannenform oder stumpfe "V"-Form.

In der weiteren Darstellung, der zweiten von rechts in Fig. 3a), ist der lange Schenkel des "L"-förmigen Profils kurz geworden. Die Basis des Abschlusskörpers 30 ist ebenfalls geschrumpft.

In der rechten Darstellung der Fig. 3a) ist die Position 5 erreicht, an der nunmehr ein trapezförmiges Profil der Füllkörper 20, 20' erreicht ist. Entsprechend hat der Abschlusskörper 30 nunmehr ein "V"-förmiges Profil.

Die Abschlusskörper 30 können auch an die Innenseite der Halbschalen 3, 3' anlaminiert oder geklebt sein. Es ergibt sich dann eine flächige und unter anderem durch die Verwendung des Abschlusskörpers 30 auch im Wesentlichen unterbrechungsfreie Verbindung der Halbschalen 3, 3' an der Rotorblatthinterkante 13.

### Bezugszeichenliste

- 2: Rotorblatt
- 3, 3': Halbschale
- 4: Rotorblattwurzel
- 5: rundes Profil
- 6: Rotorblattspitze
- 8: aerodynamisches Vollprofil
- 9: stumpfes aerodynamisches Querschnittsprofil
- 10: Profilvorderkante
- 12: Profilhinterkante
- 13: stumpfe Hinterkante
- 14: Saugseite
- 16: Druckseite
- 17: zylindrischer Bereich
- 18: Übergangsbereich
- 19: Vollprofilbereich
- 20, 20': Füllkörper
- 22, 22': erste Klebefläche
- 24, 24': zweite Klebefläche
- 26: Klebespalt
- 30: Verschlusskörper

## Patentansprüche

1. Verfahren zum Herstellen eines Rotorblatts (2) einer Windenergieanlage, das einen blattwurzelnahen Bereich aufweist, in dem das Rotorblatt (2) eine stumpfe Hinterkante (13) aufweist, mit den folgenden Verfahrensschritten:
- Herstellen einer druckseitigen Halbschale (3, 3') und einer saugseitigen Halbschale (3, 3'), die in dem blattwurzelnahen Bereich, in dem das Rotorblatt (2) die stumpfe Hinterkante aufweist, jeweils einen Teil der stumpfen Hinterkante (13) ausbilden,
- Einbringen und Verkleben von Füllkörpern (20, 20') in jeweils wenigstens einen Abschnitt des Bereichs der stumpfen Hinterkante (13) der druckseitigen Halbschale (3, 3') und der saugseitigen Halbschale (3, 3'), wobei die Füllkörper (20, 20') an der jeweiligen stumpfen Hinterkante (13) der druckseitigen Halbschale (3, 3') und der saugseitigen Halbschale (3, 3') anliegen, wobei die Abschnitte mit den Füllkörpern (20, 20') einander im zusammengesetzten Rotorblatt (2) gegenüberliegen,
- Zusammensetzen und Positionieren der Halbschalen (3, 3') zueinander, wobei zwischen den Füllkörpern (20, 20') ein Klebespalt (26) verbleibt, der von ersten Klebeflächen (22, 22') der Füllkörper (20, 20') begrenzt wird,
- Einbringen eines Klebemittels in den Klebespalt (26).

2. Verfahren nach Anspruch 1, **dadurch gekennzeichnet, dass** vor dem Einbringen eines Klebemittels in den Klebespalt (26) ein ein- oder mehrteiliger flächiger Verschlusskörper (30) an in Bezug auf das Rotorblatt (2) innenliegenden zweiten Klebeflächen (24, 24') beider Füllkörper (20, 20') zum Verschließen des Klebespalts (26) eingebracht wird.

3. Verfahren nach Anspruch 2, **dadurch gekennzeichnet, dass** der Verschlusskörper (30) vor dem Zusammensetzen der Halbschalen (3, 3') an einem Füllkörper (20, 20') befestigt wird, insbesondere an dem Füllkörper (20) in der beim Zusammensetzen unteren Halbschale (3).

4. Verfahren nach Anspruch 2 oder 3, **dadurch gekennzeichnet, dass** der Verschlusskörper (30) beim Verkleben mit Seilen und/oder Schnüren an den oder die Füllkörper (20, 20') angelegt und/oder angepresst wird, wobei die Seile und/oder Schnüre insbesondere nach dem Ankleben abgeschnitten oder entfernt werden.

5. Verfahren nach einem der Ansprüche 1 bis 4, **dadurch gekennzeichnet, dass** wenigstens ein Füllkörper (20, 20') mehrere Abschnitte mit unterschiedlichen Querschnitten aufweist.

6. Verfahren nach Anspruch 5, **dadurch gekennzeichnet, dass** wenigstens ein Füllkörper (20, 20') aus mehreren Teilkörpern zusammengesetzt ist oder wird.

7. Verfahren nach einem der Ansprüche 1 bis 6, **dadurch gekennzeichnet, dass** die zweiten Klebeflächen (24, 24') wenigstens abschnittsweise schräg zu den ersten Klebeflächen (22, 22') verlaufen.

8. Verfahren nach einem der Ansprüche 1 bis 7, **dadurch gekennzeichnet, dass** die Füllkörper (20, 20') elastisch und massiv ausgebildet sind, insbesondere Balsaholz, einen Schaumstoff oder einen faserverstärkten Verbundwerkstoff umfassen.

9. Verfahren nach einem der Ansprüche 2 bis 8, **dadurch gekennzeichnet, dass** der Verschlusskörper (30) einen faserverstärkten Kunststoff umfasst.

10. Verfahren nach einem der Ansprüche 2 bis 9, **dadurch gekennzeichnet, dass** der Verschlusskörper (30) wenigstens abschnittsweise einen "V"-förmigen Querschnitt und/oder wenigstens abschnittsweise einen stumpfen "V"-förmigen Querschnitt aufweist, insbesondere angepasst an die zweiten Klebeflächen (24, 24') der Füllkörper (20, 20').

11. Rotorblatt (2) einer Windenergieanlage mit einer stumpfen Profilhinterkante (13) in einem blattwurzelnahen Bereich, **dadurch gekennzeichnet, dass** es hergestellt ist in einem Verfahren nach einem der Ansprüche 1 bis 10, wobei die stumpfe Hinterkante (13) durch eine druckseitige Halbschale (3, 3') und eine saugseitige Halbschale (3, 3') ausgebildet ist, mit Füllkörpern (20, 20') in wenigstens einem Abschnitt der stumpfen Hinterkante (13), die an der stumpfen Hinterkante (13) der saugseitigen Halbschale (3, 3') und der stumpfen Hinterkante (13) der druckseitigen Blattschale (3, 3') anliegen.

12. Rotorblatt nach Anspruch 11, **dadurch gekennzeichnet, dass** ein Abschlusskörper (30) umfasst ist, mittels dessen ein Klebspalt (26) zwischen den Füllkörpern (20, 20') abgedichtet ist.

13. Windenergieanlage mit wenigstens einem Rotorblatt (2) nach Anspruch 11 oder 12.

## Claims

1. A method of manufacturing a rotor blade (2) of a wind energy plant, which rotor blade (2) has a region close to the blade root in which the rotor blade (2) has a blunt trailing edge (13), the method comprising the following method steps:
- manufacturing a pressure-side half shell (3, 3') and a suction-side half shell (3, 3'), each of which form, in the region close to the blade root in which the rotor blade (2) has the blunt trailing edge, a respective portion of the blunt trailing edge (13),
- introducing and gluing filling bodies (20, 20') into at least one portion of the region of the blunt trailing edge (13) of each of the pressure-side half shell (3, 3') and the suction-side half shell (3, 3'), wherein the filling bodies (20, 20') rest against the respective blunt trailing edge (13) of the pressure-side half shell (3, 3') and the suction-side half shell (3, 3'), wherein the portions with the filling bodies (20, 20') are located opposite one another in the assembled rotor blade (2),
- assembling and positioning the half shells (3, 3') relative to one another, wherein a gap (26) intended for an adhesive medium remains between the filling bodies (20, 20'), which gap (26) intended for an adhesive medium is delimited by first adhesive surfaces (22, 22') of the filling bodies (20, 20'), and
- introducing an adhesive medium into the gap (26) intended for an adhesive medium.

2. The method according to claim 1, **characterised in that**, before the introduction of an adhesive medium into the gap (26) intended for an adhesive medium, a one-part or multi-part flat closure body (30) is introduced at second adhesive surfaces (24, 24') of both filling bodies (20, 20'), which second adhesive surfaces (24, 24') are located on the inside with respect to the rotor blade (2), for sealing the gap (26) intended for an adhesive medium.

3. The method according to claim 2, **characterised in that** the closure body (30) is fixed to a filling body (20, 20') before the half shells (3, 3') are assembled, in particular to the filling body (20) in the half shell (3) which, during assembly, is at the bottom.

4. The method according to claim 2 or 3, **characterised in that** the closure body (30) is placed next to, and/or pressed against, the filling body or filling bodies (20, 20') with the aid of ropes and/or cords during gluing, in particular wherein the ropes and/or cords are cut off or removed after gluing.

5. The method according to any one of the claims 1 to 4, **characterised in that** at least one filling body (20, 20') comprises several portions with different cross-sections.

6. The method according to claim 5, **characterised in that** at least one filling body (20, 20') is composed of, or assembled from, several partial bodies.

7. The method according to any one of the claims 1 to 6, **characterised in that** the second adhesive surfaces (24, 24') extend, at least in sections, obliquely with respect to the first adhesive surfaces (22, 22').

8. The method according to any one of the claims 1 to 7, **characterized in that** the filling bodies (20, 20') are constructed so as to be elastic and solid, in particular that they comprise balsa wood, a foam or a fibre-reinforced composite material.

9. The method according to any one of the claims 2 to 8, **characterised in that** the closure body (30) comprises a fibre-reinforced plastics material.

10. The method according to any one of the claims 2 to 9, **characterized in that** the closure body (30) has, at least in sections, a "V"-shaped cross-section and/or, at least in sections, a blunt "V"-shaped cross-section, in particular adapted to the second adhesive surfaces (24, 24') of the filling bodies (20, 20').

11. A rotor blade (2) of a wind energy plant, the rotor blade (2) having a blunt profile trailing edge (13) in a region close to the blade root, **characterised in that** it is manufactured by means of a method according to any one of the claims 1 to 10, wherein the blunt trailing edge (13) is formed by a pressure-side half shell (3, 3') and a suction-side half shell (3, 3'), with filling bodies (20, 20') in at least one portion of the blunt trailing edge (13), which filling bodies (20, 20') rest against the blunt trailing edge (13) of the suction-side half shell (3, 3') and the blunt trailing edge (13) of the pressure-side blade shell (3, 3').

12. The rotor blade according to claim 11, **characterised in that** a closure body (30) is included, by means of which a gap (26), intended for an adhesive medium and located between the filling bodies (20, 20'), is sealed.

13. A wind energy plant with at least one rotor blade (2) according to claim 11 or 12.

## Revendications

1. Procédé servant à fabriquer une pale de rotor (2) d'une éolienne, qui présente une zone proche de la racine de pale, dans laquelle la pale de rotor (2) présente une arête arrière obtuse (13), avec les étapes de procédé suivantes :
- fabrication d'une demi-coque côté pression (3, 3') et d'une demi-coque côté aspiration (3, 3'), qui forment dans la zone proche de la racine de pale, dans laquelle la pale de rotor (2) présente l'arête arrière obtuse, respectivement une partie de l'arête arrière obtuse (13),
- introduction et collage de corps de remplissage (20, 20') dans respectivement au moins une section de la zone de l'arête arrière obtuse (13) de la demi-coque côté pression (3, 3') et de la demi-coque côté aspiration (3, 3'), dans lequel les corps de remplissage (20, 20') s'appuient contre l'arête arrière obtuse (13) respective de la demi-coque côté pression (3, 3') et de la demi-coque côté aspiration (3, 3'), dans lequel les sections avec les corps de remplissage (20, 20') se font face l'une l'autre dans la pale de rotor (2) assemblée,
- assemblage et positionnement des demi-coques (3, 3') l'une par rapport à l'autre, dans lequel un joint de collage (26) reste entre les corps de remplissage (20, 20'), qui est délimité par des premières surfaces de collage (22, 22') des corps de remplissage (20, 20'),
- introduction d'un adhésif dans le joint de collage (26).

2. Procédé selon la revendication 1, **caractérisé en ce qu'**avant l'introduction d'un adhésif dans le joint de collage (26) un corps de fermeture (30) plat à une ou plusieurs parties est introduit au niveau de deuxièmes surfaces de collage (24, 24') situées à l'intérieur par rapport à la pale de rotor (2) des deux corps de remplissage (20, 20') pour la fermeture du joint de collage (26).

3. Procédé selon la revendication 2, **caractérisé en ce que** le corps de fermeture (30) est fixé avant l'assemblage des demi-coques (3, 3') au niveau d'un corps de remplissage (20, 20'), en particulier au niveau du corps de remplissage (20) dans la demi-coque inférieure (3) lors de l'assemblage.

4. Procédé selon la revendication 2 ou 3, **caractérisé en ce que** le corps de fermeture (30) est appliqué et/ou pressé lors du collage avec des câbles et/ou cordes contre le ou les corps de remplissage (20, 20'), dans lequel les câbles et/ou cordes sont découpés ou retirés en particulier après le collage.

5. Procédé selon l'une quelconque des revendications 1 à 4, **caractérisé en ce qu'**au moins un corps de remplissage (20, 20') présente plusieurs sections avec différentes sections transversales.

6. Procédé selon la revendication 5, **caractérisé en ce qu'**au moins un corps de remplissage (20, 20') se compose ou est composé de plusieurs corps partiels.

7. Procédé selon l'une quelconque des revendications 1 à 6, **caractérisé en ce que** les deuxièmes surfaces de collage (24, 24') s'étendent au moins par section en biais par rapport aux premières surfaces de collage (22, 22').

8. Procédé selon l'une quelconque des revendications 1 à 7, **caractérisé en ce que** les corps de remplissage (20, 20') sont réalisés de manière élastique et massive, en particulier bois de balsa, une mousse ou un matériau composite renforcé de fibres.

9. Procédé selon l'une quelconque des revendications 2 à 8, **caractérisé en ce que** le corps de fermeture (30) comprend un plastique renforcé de fibres.

10. Procédé selon l'une quelconque des revendications 2 à 9, **caractérisé en ce que** le corps de fermeture (30) présente au moins par section une section transversale en forme de « V » et/ou au moins par section une section transversale en forme de
« V » obtuse, en particulier adaptée aux deuxièmes surfaces de collage (24, 24') des corps de remplissage (20, 20').

11. Pale de rotor (2) d'une éolienne avec une arête arrière de profilé obtuse (13) dans une zone proche de la racine de pale, **caractérisée en ce qu'**elle est fabriquée dans un procédé selon l'une quelconque des revendications 1 à 10, dans lequel l'arête arrière obtuse (13) est réalisée par une demi-coque côté pression (3, 3') et une demi-coque côté aspiration (3, 3'), avec des corps de remplissage (20, 20') dans au moins une section de l'arête arrière obtuse (13), qui s'appliquent contre l'arête arrière obtuse (13) de la demi-coque côté aspiration (3, 3') et de l'arête arrière obtuse (13) de la demi-coque côté pression (3, 3').

12. Pale de rotor selon la revendication 11, **caractérisée en ce qu'**un corps terminal (30) est compris, au moyen duquel un joint de collage (26) est rendu étanche entre les corps de remplissage (20, 20').

13. Éolienne avec au moins une pale de rotor (2) selon la revendication 11 ou 12.
